# EUROPÄISCHE PATENTSCHRIFT

(11) **EP 0 658 232 B1**
(45) Veröffentlichungstag und Bekanntmachung des Hinweises auf die Patenterteilung: **04.10.2000**
(21) Anmeldenummer: 93917548.5
(22) Anmeldetag: 12.08.1993
(51) Int. Cl.: E04B 1/58, B21C 37/29, B21D 47/00, B29C 67/00

(54) **FACHWERK MIT HOHLTEILEN, VERFAHREN ZU SEINER HERSTELLUNG UND SEINE VERWENDUNG**
FRAMEWORK WITH HOLLOW MEMBERS, PROCESS FOR PRODUCING THE SAME AND ITS USE
CHARPENTE EN PIECES CREUSES, SON PROCEDE DE FABRICATION ET SON UTILISATION

(30) Priorität: 25.08.1992 DE 4228238
(43) Veröffentlichungstag der Anmeldung: 21.06.1995
(73) Patentinhaber: Magna IHV Gesellschaft für Innenhochdruckverfahren MBH, 73441 Bopfingen (DE)
(72) Erfinder: KAEHLER, Klaus, D-73431 Aalen (DE); KLAAS, Friedrich, D-73432 Aalen (DE); BÖGEL, Helmut, D-73431 Aalen (DE)
(74) Vertreter: Kovac, Werner, Dipl.-Ing.
(86) Internationale Anmeldenummer: DE9300725
(87) Internationale Veröffentlichungsnummer: WO9404766

(56) Entgegenhaltungen:
- WO-A-87/01978
- DE-B- 2 736 635
- FR-A- 1 154 610
- GB-A- 2 095 147
- US-A- 2 995 781
- US-A- 4 051 704
- US-A- 4 705 286

## Beschreibung

Die Erfindung betrifft ein Verfahren zur Herstellung eines Fachwerks mit Knoten und Stäben, ein Fachwerk sowie dessen Verwendung.

Fachwerke sind für die verschiedensten Anwendungsgebiete bekannt - so für Bauwerke, insbesondere Brücken oder auch Häuser - als stützende und tragende Elemente oder auch für den Bau von Luft - Land- und Wasserfahrzeugen, Regalsystemen u. dgl.

Sie haben unter anderem den Vorteil, eine leichte aber dennoch gegenüber Belastungen widerstandsfähige Bauweise zu ermöglichen.

Bei Kraftfahrzeugen, insbesondere dem alten "Flügeltür-Mercedes-SL' wurden schon Gitterrohrrahmen eingesetzt um eine besonders leichte, widerstandsfähige und torsionssteife Bauweise zu ermöglichen. Auch bei Flugzeugen, bei denen Gewichtsersparnis ein wesentlicher Gesichtspunkt bei der Konstruktion ist, wurde häufig eine Fachwerkbauweise eingesetzt.

Aus der US-A-4051704 ist ein Verfahren für die Herstellung von Fahrradrahmen mittels eines Innenhochdruckumformverfahrens bekanntgeworden, bei dem Erhebungen an Rahmenteilen durch innen angelegten Druck ausgebildet werden - dabei findet im Bereich der Erhebungen eine Materialausdünnung statt, wodurch die Bereiche der Knoten geschwächt werden.

Aus der FR-B 154610 ist ein Verfahren zum Umformen von hohlen Metallteilen bekanntgeworden, bei dem im Bereich von Erhebungen das Material ausgedünnt wird.

Aus aus der US-A2995781 ist ebenfalls ein Verfahren zum Umformen von Hohlteilen bekanntgeworden, bei dem im Bereich von Erhebungen ebenfalls das Material dünner wird.

Aus der US-A 4705286 wiederum ist ein Fahrradrahmen bekanntgeworden, der ein Fachwerk aus Hohlteilen aufweist, wobei offene Erhebungen an Rohren durch Herausdrücken oder Ausstanzen gebildet werden, auf die dann andere Hohlteile aufgesteckt werden. Auch hier tritt im Bereich der Knoten eine Materialschwächung ein.

Die bekannten Fachwerke waren insofern noch verbesserungsfähig, als in den Knoten des Fachwerks Schwachstellen beim Anfügen der Fachwerkskomponenten auftreten konnten. Üblicherweise wurden dort die Einzelteile des Fachwerks übereinander oder stumpf aneinander befestigt, bspw. geschweißt. An den Schweißnähten, Klebestellen od. dgl. und auch an den Enden der zu verbindenden Hohlteile traten leicht Korrosionen auf - ein Korrosionsschutz war dort nur äußerst schwierig und häufig nicht zufriedenstellend anzubringen.

Diese Schweißstellen oder Befestigungsstellen von Querteilen am Längsteil waren stets Punkte der Schwächung und führten außerdem dazu, daß ein aufwendiger Arbeitsvorgang bei der Herstellung notwendig war.

Ferner war es nachteilig, daß aufgrund des Erfordernisses der Befestigung weiterer Querhohlteile am Längshohlteil relativ hohe Wandstärken für die Hohlteile für die Herstellung einer zufriedenstellenden Verbindung verwendet werden mußten, die zu unerwünscht hohen Gewichten dieses Teils führten.

Es ist demgegenüber Aufgabe der Erfindung, Verfahren zur Herstellung von Fachwerken vorzuschlagen sowie Fachwerke herzustellen, die gegenüber bekannten Einzelkomponenten leichter verarbeitbar und gegenüber Korrosion beständiger sind.

Die Aufgabe wird erfindungsgemäß durch ein Verfahren mit den Merkmalen des Patentanspruches 1 gelöst. Ferner betrifft die Erfindung auch ein Fachwerk mit den Merkmalen des Patentanspruches 2 sowie die Verwendung dersselben.

Dabei ist es vorteilhaft, wenn der Faserverlauf des Materials im Knoten im wesentlichen parallel zu den Außenkonturen des Hohlteils verläuft.

Es kann günstig sein, daß mindestens die Knoten aufweisenden Fachwerkteile mehrere parallel zueinander verlaufende, aufeinanderliegende Schichten gleicher oder unterschiedlicher Materialien aufweisen, deren Faserverlauf parallel zueinander ist. Bei einer bevorzugten Ausführungsform bestehen mindestens die Knoten/Stabteile aus Stahl mit einer Wanddicke zwischen 0,1 und 1,5 cm, bevorzugt zwischen 0,2 und 0,5 cm.

Insbesondere zur Gewichtsersparnis kann das Fachwerk im wesentlichen aus Leichtmetall bestehen.

Bspw. kann das Leichtmetall Aluminium oder eine Legierung desselben sein, womit auch eine günstige Korrosionsfestigkeit verbunden sein kann.

Es ist möglich und in vielen Anwendungsfällen erwünscht, daß das Fachwerk faserverstärkte Werkstoffe aufweist, die bei leichtem Gewicht eine hohe mechanische Belastbarkeit aufweisen.

Das Fachwerk mit Knoten und Stäben weist unterschiedliche Längsschnitte und auch unterschiedliche Querschnitte auf.

Es kann vorteilhaft sein, daß die Einzelkomponenten des Fachwerks aus unterschiedlichen Materialien bestehen.

Es kann günstig sein, daß mindestens ein Hohlteil Vertiefungen und/oder eingeformte Öffnungen aufweist.

Ein vorteilhaftes Verfahren zur Herstellung von Fachwerken nach einem der vorangehenden Ansprüche besteht darin, daß die Fachwerksknoten aus einem umformbaren Hohlmaterial durch ein Umformverfahren hergestellt werden, bevorzugt ist das Umformverfahren ein Innenhochdruckumformverfahren.

Eine bevorzugte Ausführungsform des Herstellungsverfahrens für ein Fachwerk-Knotenteil weist folgende Schritte auf:
Vorlegen eines Hohlprofils, ggf. mit unterschiedlichen Durchmessern;
Einlegen eines Hohlprofilabschnitts in eine Form mit einer Erweiterung im Umformbereich;
Anlegen eines Innenhochdrucks an das Rohr, so daß die Rohrwand im Bereich der Formerweiterung erweitert wird;
Herausnehmen des in umgeformten Hohlteils mit Knotenbereich mit Erweiterungen sowie ggf.
Befestigen von Fachwerkstababschnitten auf den Erweiterungen.

Unter Innenhochdruckverfahren oder auch IHV-Verfahren wird hier das Verfahren verstanden, das beispielsweise im Industrieanzeiger Nr. 20 vom 9.3.1984 beschrieben worden ist oder auch in Metallumformtechnik, Ausgabe ID/91, Seite 15 ff: A. Ebbinghaus: Präzisionswerkstücke in Leichtbauweise, hergestellt durch Innenhochdruckumformen" oder auch Werkstoff und Betrieb 123 (1990), 3, Seite 241 bis 243: A. Ebbinghaus: "Wirtschaftliches Konstruieren mit innenhochdruckumgeformten Präzisionswerkstücken" oder auch "Werkstoff und Betrieb 122, (1991), 11, (1989), Seite 933 bis 938. Nachfolgend wird zur Vermeidung von Wiederholungen auf deren Offenbarung in vollem Umfang Bezug genommen. Dieses Verfahren wurde bisher für die Herstellung von Flanschen bzw. zur Herstellung von gebauten Nockenwellen zur Befestigung von Nocken an einem Rohr zur Herstellung von hohlen Nockenwellen eingesetzt.

Überraschenderweise läßt sich durch dieses Innenhochdruckverfahren nun ein völlig neues Fachwerkteil, bei dem der Knoten oder die "Kreuzung" bereits einstückig angeformt sind und der Faserverlauf im Bereich der Kreuzung sowie der Wände im wesentlichen parallel zur Außenkontur verläuft, ohne daß Ausknickungen oder andere Schwächungen vorliegen, bilden. Das erfindungsgemäße Fachwerk kann demzufolge aufgrund der hohen Wandfestigkeit durch den günstigen Faserverlauf in leichterer Form als bisher ausgebildet werden und ermöglicht dadurch eine erhebliche Gewichtsersparnis. Es ist auch möglich, laminierte Werkstoffe einzusetzen, sofern sich diese gemeinsam umformen lassen. Laminate können durch geeignete Materialauswahl leichter sein als Vollmaterialien und haben noch dazu den Vorteil, vibrationsdämnpfend zu wirken, sodaß ein derartiges Teil noch dazu günstige Schwingungsdämpfungseigenschaften besitzt - also Verbindungsstellen weniger durch Schwingungen belastet werden.
Es kann auch ein mehrschichtiges Metallrohr als Ausgangsteil, je nach den Anforderungen an das Material, gewählt werden. Dabei haben mehrschichtige Ausgestaltungen den Vorteil unterschiedlicher Beanspruchbarkeit der Oberflächen des Hohlteils und auch den Vorteil, Schwingungen aller Art schlechter zu leiten, was das Vibrationsverhalten des Hohlteils im Einsatz entscheidend verbessert.

Vorteilhafte Verwendungen des erfindungsgemäßen Fachwerks sind Land- Luft- und Wasserfahrzeuge, Fahrrad-, Motorrad- sowie Autorahmen, Hoch- und Tiefbau, Gerüste, Regalsysteme, Möbel.

Dadurch, daß erfindungsgemäß weitestgehend abgeschlossene Hohlteile zur Herstellung des Fachwerks eingesetzt werden, ist es möglich, in den Bereichen der Knoten des Fachwerks einfachste Anbindung von weiteren Fachwerksteilen zu ermöglichen. Im Bereich der Überlappung einer Erhebung eines Hohlteils mit dem Endabschnitt eines weiteren Hohlteils des Fachwerks kann die Verbindung durch Anschweißen, Ankleben, Annieten, Schrauben, sowie andere geeignete, dem Fachmann geläufige Befestigungsverfahren hergestellt werden, wobei auch lösbare Verbindungen, wie sie beispielsweise für Gerüste erwünscht sind, durch Durchschrauben od. dgl. hergestellt werden können.

Dadurch, daß ein Innenhochdruckunformverfahren eingesetzt wird, ist es möglich, bereits in einem Formvorgang Erhebungen und Vertiefungen, Öffnungen u. dgl. am Hohlteil herzustellen. Dadurch ist es möglich, Nachbehandlungsschritte zu reduzieren.

Als Hohlteile können dabei unterschiedlichste Hohlprofile nämlich Reckteckprofile, Winkelprofile, Rohre, etc. eingesetzt werden.

Es wird somit ein Teil mit einem gegenüber bisherigen Teilen geringerem Gewicht bei gleicher Belastbarkeit oder auch höherer Belastbarkeit bei gleichem Gewicht geschaffen; das noch dazu mit hoher Produktionsgenauigkeit bei verminderter Ausschußquote hergestellt werden kann.

Das erfindungsgemäße Hohlteil kann bevorzugt nach dem Innenhochdruckverfahren hergestellt werden.

überraschenderweise läßt sich durch dieses Innenhochdruckverfahren nun ein völlig neuer Fachwerkteil, bei dem der Knoten des Fachwerks bereits einstückig angeformt ist und der Faserverlauf im Bereich der Kreuzung sowie der Wände im wesentlichen parallel zur Außenkontur verläuft, ohne daß Ausknickungen oder andere Schwächungen vorliegen, bilden. Das erfindungsgemäße Fachwerk kann demzufolge aufgrund der hohen Wandfestigkeit durch den günstigen Faserverlauf in leichterer Form als bisher ausgebildet werden und ermöglicht dadurch ine erhebliche Gewichtsersparnis. Es ist auch möglich, laminierte Werkstoffe einzusetzen, sofern sich diese gemeinsam umformen lassen. Laminate haben noch dazu den Vorteil, Vibrationsdämpfend zu wirken, sodaß ein derartiges Teil noch günstige Schwingungsdämpfungseigenschaften besitzt.

Die Herstellung des erfindungsgemäßen Hohlteils erfolgt wie folgt: Es wird ein Rohrteil mit unterschiedlichen Durchmessern hergestellt, (bspw. durch Rundkneten) wobei nachfolgend der Knotenbereich unter Innendruck gegen eine Außenform gedrückt wird, um ein Kreuzteil mit zwei geschlossenen Enden zu erhalten.

Es ist erwünscht, während des Umformens Material in Richtung Kreuzungsteil in Richtung der Rohrlängsachse nachzuführen, um das Entstehen von Materialausdünnungen im Kreuzungsbereich zu vermeiden.

Nachfolgend soll die Erfindung näher anhand der beigefügten Zeichnungen erläutert werden, in der
Figur 1: Ausschnitt eines Fachwerks schematisch in perspektivischer Darstellung;
Fig. 2: das hohle Fachwerk aus Vollmaterial mit mehreren Knotenbereichen im Längsschnitt;
Fig. 3. einen Teil des hohlen Fachwerks aus Laminat mit einem Knotenbereich im Längsschnitt;
Figur 4: einen innenhochdruckumgeformten Knoten aus Vollmaterial im Detail;
Fig. 5: einen Querschnitt durch einen Knotenbereich eines Rechteckprofil-Hohlteils;
Fig. 6: einen Querschnitt durch den Knotenbereich eines runden Rohres als Hohlteil; und
Fig. 7: einen Querschnitt durch den Knotenbereich eines Mehrkantrohres.

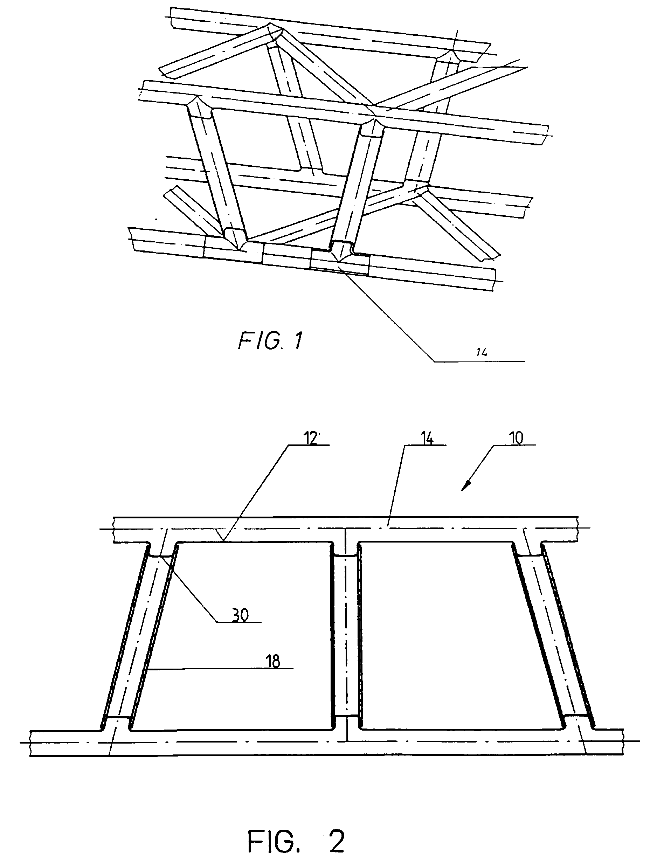

Wie aus Fig. 1, die einen Ausschnitt aus einem Fachwerk gemäß der Erfindung zeigt, ersichtlich, besteht das Fachwerk aus Knoten/Stabteilen 12 und weiteren Knoten/Stabteilen 12 oder Stabteilen 18. Auf den Knoten-Stabteilen 12 sind im Knotenbereich 14 Erhebungen 30 ausgeformt, auf die bspw. Stabteile 18, aber auch Knoten/Stabteile 12 aufgesteckt werden können, die sodann lösbar oder unlösbar mit der Erhebung 30 verbunden werden können.

Wie in Fig. 2 gezeigt, können die Knoten sich je nach Erfordernis räumlich erstrecken, sodaß ein dreidimensionales Fachwerkgerüst mit hoher Haltbarkeit erzielt werden kann.

Es ist zu beachten, daß in die durch das Umformverfahren hergestellten Fachwerkteile Soll-Stauchstellen durch gezielt eingeformte Rillen ausgebildet werden können - bspw. um bei Fahrzeugen im Falle eines Unfalls durch gezielte Verformung Energie aufzunehmen - oder auch Verstärkungsprofile eingearbeitet werden können - bspw. durch das Ausformen von Längsrippen (Fahrgastzelle)..

Dabei können die Hohlprofile des Fachwerkes unterschiedliche Durchmesser über ihre Längserstreckung besitzen, sowie unterschiedliche Querschnitte.

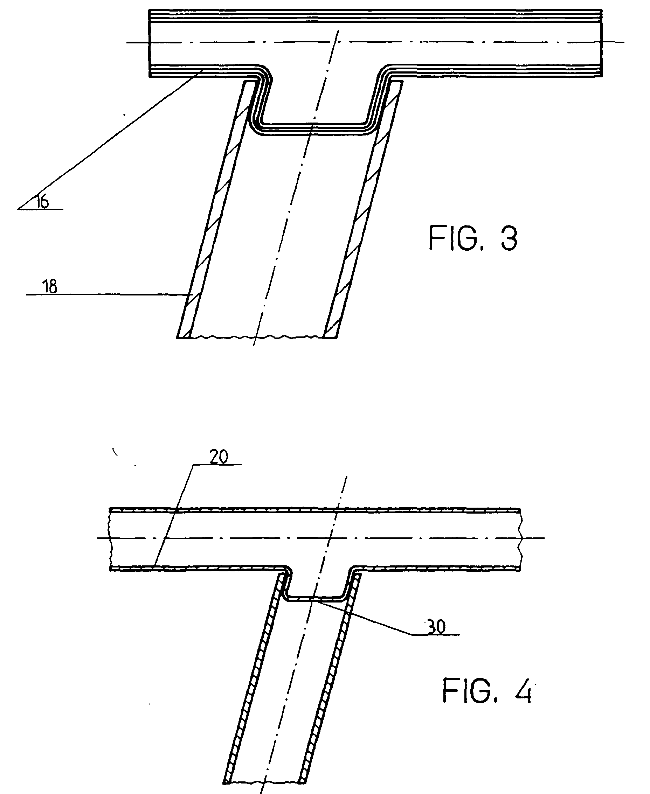

In Fig. 3 ist detailliert im Längsschnitt die Ausbildung eines Knotens gezeigt. Hier wurde eine Ausführungsform gewählt, bei der ein aus mehreren Schichten bestehendes Knoten/Stabteil 12 mit einem aus nur einem Material bestehenden Stabteil kombiniert wurde - bspw. kann dies Teil eines leiterartigen Teils mit Laminat-Längsholmen sowie Trittstufen aus einem anderen Material sein.

In Fig. 4 ist eine Ausführungsform der Verbindung zwischen Knoten/Stabteil 12 und Stabteil 18 im Schnitt gezeigt, bei der beide Teile aus einem einschichtigen Material bestehen.

In beiden Fällen ist die Befestigung der Stabteile 18 oder auch weiterer Knoten/Stabteile 12 am Knoten/Stabteil 12 nur schematisch dargestellt und kann in der Praxis durch Ankleben, Anschweißen oder auch Anschrauben, Annieten od. dgl. erfolgen.

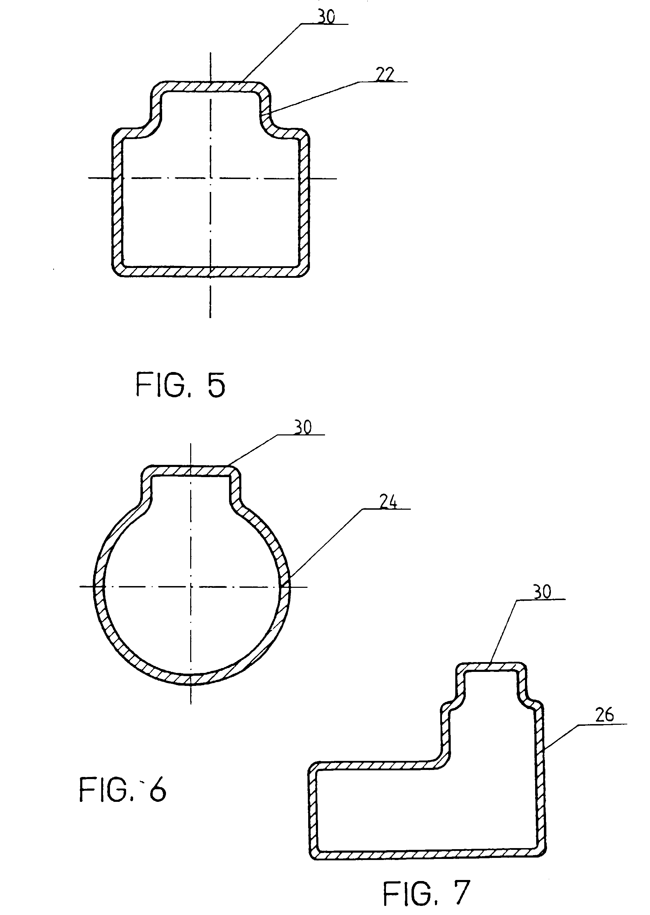

Als Hohlprofile können unterschiedlichste Formen eingesetzt werden, wie aus den Fig. 5 - 7 ersichtlich.

Je nach Anwendungsform kann es sinnvoll sein, ein Rechteckprofil 22 mit einer Erhebung 30 auszubilden. Genauso ist es möglich, ein rundes oder ovales Profil 24 mit einer Erhebung 30 zum Verbinden mit einem Stabteil auszubilden, wie aus Fig. 6 zu sehen. Wie aus Fig. 7 ersichtlich, können derartige Erhebungen zur Vereinfachung der Befestigung von Stäben ein Knoten auch an rechtwinkligen Hohlprofilen 26 ausgebildet sein.

Dabei können die Hohlprofile sowohl aus einem einzigen Material, bspw. Stahl oder eine Leichtmetallegierung, bestehen, es ist aber je nach Einsatzverfahren auch möglich, Laminatmaterial, auch kunststoffbeschichtete oder überzogene Rohre umzuformen, je nach Anwendungszweck.

Durch das Vorsehen entsprechender Schichten ist es möglich, korrosionsbeständigkeit oder auch Farbgebung zu erreichen, ohne daß weitere Arbeitsschritte notwendig sind.

Wie bekannt, kann durch das Innenhochdruckverfahren der Knotenbereich sozusagen aus dem Hohlteilvorläuferläufer "herausgedrückt" werden, so daß mehrere Erhebungen 30 am Hohlteil entstehen, wie in den Figuren gezeigt. Es ist möglich, durch Nachführen von Material entlang der Rohrlängsachsen während des Umformens, bspw. durch bewegliche Formelemente, eine im wesentlichen gleichbleibende Wandstärke zu erzielen, so daß Schwächungen der Wandstärke durch die Anformung derartiger Erhebungen zumindest teilweise ausgeglichen werden können, so daß eine Anformung des Kreuzungsbereiches ohne Schwächung erfolgt. Aufgrund des günstigen Faserverlaufs ist dieses Teil leicht und weist keine Schweißstellen oder dergleichen im Kreuzungsbereich auf.

Somit wird durch die erfindungsgemäße Ausbildung insbesondere des Knotenbereichs eines Fachwerks ein widerstandsfähigeres, leichteres Fachwerk als bisher möglich, geschaffen.

Weitere Ausgestaltungen und Fortentwicklungen sind im Rahmen des Umfangs der Patentansprüche dem Fachmann offensichtlich. Die hier beispielhaft aufgeführten Ausführungsformen dienen lediglich zur Erläuterung.

## Patentansprüche

1. Verfahren zur Herstellung eines Fachwerks aus Knoten und Stäben, wobei die Knoten gebildet sind durch jeweils mindestens eine Erhebung auf einem hohlen Fachwerksteil und einem darauf aufgesteckten und befestigten weiteren Hohlteil, wobei die Hohlteile durch ein Innenhochdruckumformverfahren hergestellt sind, mit den Schritten:
- Vorlegen eines Hohlprofils,
- Einlegen eines Hohlprofilabschnitts in eine Form mit einer Erweiterung im Umformbereich;
- Anlegen eines Innenhochdrucks an das Rohr, so daß die Rohrwand im Bereich der Formerweiterung erweitert wird, unter gleichzeitigem Nachführen des Hohlprofilmaterials in Richtung der Rohrlängsachse und Herstellung einer geschlossenen Erhebung;
- Herausnehmen des umgeformten Hohlteils mit Knotenbereich mit geschlossenen Erhebungen, sowie
- Aufstecken und Befestigen von Fachwerkstababschnitten auf den geschlossenen Erhebungen.

2. Fachwerk, hergestellt nach dem Verfahren des Patentanspruchs 1, mit Knoten und Stäben, wobei die Knoten (14) durch mindestens eine geschlossene Erhebung (30) auf einem hohlen Fachwerksteil und mindestens ein darauf aufgestecktes und befestigtes weiteres Hohlteil gebildet sind, wobei dessen Einzelkomponenten aus gleichen oder unterschiedlichen Materialien bestehen.

3. Fachwerk mit Knoten und Stäben nach Anspruch 2, dadurch gekennzeichnet, daß der Faserverlauf des Materials im Knoten (14) im wesentlichen parallel zu den Außenkonturen des Knoten/Stabteiles (12) verläuft.

4. Fachwerk mit Knoten und Stäben nach Anspruch 2 oder 3, da-durch gekennzeichnet, daß mindestens die die Knoten (14) aufweisenden Teile (12) mehrere parallel zueinander verlaufende, aufeinanderliegende Schichten gleicher oder unterschiedlicher Materialien aufweisen, deren Faserverlauf parallel zueinander ist.

5. Fachwerk mit Knoten und Stäben nach einem der vorangehenden Ansprüche, dadurch gekennzeichnet, daß die Materialien eine oder mehrere Schichten aus kaltverformbarem Material, wie einem Metall, aufweisen.

6. Fachwerk mit Knoten und Stäben nach einem der vorangehenden Ansprüche, dadurch gekennzeichnet, daß es aus Stahl besteht und die Wanddicke zwischen 0,1 und 1,5 cm, bevorzugt zwischen 0,2 und 0,5 cm beträgt

7. Fachwerk nach einem der Ansprüche 2 bis 5, dadurch gekennzeichnet, daß es im wesentlichen aus Leichtmetall, Aluminium oder einer Legierung desselben, oder Magnesium oder einer Legierung desselben, besteht.

8. Fachwerk mit Knoten und Stäben nach einem der vorangehenden Ansprüche, dadurch gekennzeichnet daß es faserverstärkte Werkstoffe aufweist.

9. Fachwerk mit Knoten und Stäben nach einem der vorangehenden Ansprüche, dadurch gekennzeichnet, daß es unterschiedliche Längsschnitte und oder unterschiedliche Querschnitte aufweist.

10. Fachwerk mit Knoten und Stäben nach einem der vorangehenden Ansprüche, dadurch gekennzeichnet, daß mindestens ein Hohlteil Vertiefungen aufweist.

11. Fachwerk mit Knoten und Stäben nach einem der vorangehenden Ansprüche, dadurch gekennzeichnet daß mindestens ein Hohlteil eingeformte Öffnungen aufweist.

12. Verwendung des Fachwerks nach einem der Ansprüche 2 bis 11 für Land-Luft- und Wasserfahrzeuge, Fahrrad-, Motorrad- sowie Autorahmen, Hoch- und Tiefbau, Gerüste, Regalsysteme, Möbel.

## Claims

1. Process for producing a framework from junction elements and bars, the junction elements being formed by in each case one elevation on a hollow framework part and on [sic] a further hollow part fitted and fastened thereon, the hollow parts being produced by an internal-high-pressure deformation process, having the following steps:
- providing a hollow profile;
- positioning a hollow-profile section in a mould with a widened portion in the deformation region;
- applying an internal high pressure to the tube, with the result that the tube wall is widened in the region of the widened portion of the mould, with the hollow-profile material simultaneously following along in the direction of the longitudinal axis of the tube and a closed elevation being produced;
- removing the deformed hollow part with junction-element region with closed elevations; and
- fitting and fastening framework-bar sections on the closed elevations.

2. Framework which is produced by the process of Patent Claim 1 and has junction elements and bars, the junction elements (14) being formed by at least one closed elevation (30) on a hollow framework part and at least one further hollow part fitted and fastened thereon, the individual components thereof consisting of the same material or of different materials.

3. Framework with junction elements and bars according to Claim 2, characterized in that the fibre flow of the material in the junction element (14) runs essentially parallel to the outer contours of the junction element/bar part (12).

4. Framework with junction elements and bars according to Claim 2 or 3, characterized in that at least the parts (12), which have the junction elements (14), have a plurality of mutually parallel layers which are located one above the other and are made of the same material or different materials, with mutually parallel fibre flow.

5. Framework with junction elements and bars according to one of the preceding claims, characterized in that the materials have one or more layers made of cold-workable material, such as a metal.

6. Framework with junction elements and bars according to one of the preceding claims, characterized in that it consists of steel and the wall thickness is between 0.1 and 1.5 cm, preferably between 0.2 and 0.5 cm.

7. Framework according to one of Claims 2 to 5, characterized in that it consists essentially of light metal, aluminium or an alloy thereof, or magnesium or an alloy thereof.

8. Framework with junction elements and bars according to one of the preceding claims, characterized in that it has fibre-reinforced materials.

9. Framework with junction elements and bars according to one of the preceding claims, characterized in that it has different longitudinal sections and/or different cross sections.

10. Framework with junction elements and bars according to one of the preceding claims, characterized in that at least one hollow part has depressions.

11. Framework with junction elements and bars according to one of the preceding claims, characterized in that at least one hollow part has openings formed in it.

12. Use of the framework according to one of Claims 2 to 11 for land, air and water vehicles, bicycle, motorcycle and vehicle frames, building construction and civil engineering, scaffolding, rack systems and furniture.

## Revendications

1. Procédé de fabrication d'une structure en treillis constituée d'éléments de jonction et de barres, dans laquelle les éléments de jonction sont formés par au moins une saillie s'élevant sur une pièce de structure creuse et par une autre pièce creuse montée et fixée sur la précédente, les pièces creuses étant fabriquées par un procédé de formage à haute pression interne, le procédé comportant les étapes consistant à :
- présenter un profilé creux ;
- placer une portion du profilé creux dans un moule comportant une expansion dans la région de conformation ;
- appliquer une haute pression interne au tube de telle sorte que la paroi du tube soit expansée dans la région d'expansion du moule, en guidant en même temps la matière du profilé creux dans le sens de l'axe longitudinal du tube et en réalisant une saillie fermée ;
- démouler la pièce creuse conformée comportant une zone de jonction avec des saillies fermées, et
- monter et fixer des portions de barre de structure sur les saillies fermées.

2. Structure en treillis, fabriquée selon le procédé de la revendication 1, comportant des éléments de jonction et des barres, dans laquelle les éléments de jonction (14) sont formés par au moins une saillie fermée (30) s'élevant sur une pièce de structure creuse et par au moins une autre pièce creuse montée et fixée sur la précédente, les composants individuels de cette structure étant constitués de la même matière ou de matières différentes.

3. Structure en treillis comportant des éléments de jonction et des barres selon la revendication 2, caractérisée en ce que le fibrage de la matière des éléments de jonction (14) est sensiblement parallèle aux contours extérieurs de la pièce (12) constituée de barres et d'éléments de jonction.

4. Structure en treillis comportant des éléments de jonction et des barres selon la revendication 2 ou 3, caractérisée en ce qu'au moins les pièces (12) comportant les éléments de jonction (14) sont constituées de plusieurs couches superposées, de même matière ou de matières différentes, parallèles les unes aux autres, et parallèles au fibrage.

5. Structure en treillis comportant des éléments de jonction et des barres selon l'une des revendications précédentes, caractérisée en ce que les matériaux sont constitués d'une ou de plusieurs couches de matière emboutie à froid, par exemple un métal.

6. Structure en treillis comportant des éléments de jonction et des barres selon l'une des revendications précédentes, caractérisée en ce qu'elle est en acier, et que l'épaisseur de paroi est comprise entre 0,1 et 1,5 cm, de préférence entre 0,2 et 0,5 cm.

7. Structure en treillis selon l'une des revendications 2 à 5, caractérisée en ce qu'elle est essentiellement en métal léger, tel que l'aluminium ou un alliage de celui-ci, ou le magnésium ou un alliage de celui-ci.

8. Structure en treillis comportant des éléments de jonction et des barres selon l'une des revendications précédentes, caractérisée en ce qu'elle est constituée de matières renforcées par des fibres.

9. Structure en treillis comportant des éléments de jonction et des barres selon l'une des revendications précédentes, caractérisée en ce qu'elle comporte des sections longitudinales différentes et/ou des sections transversales différentes.

10. Structure en treillis comportant des éléments de jonction et des barres selon l'une des revendications précédentes, caractérisée en ce qu'au moins une pièce creuse comporte des renfoncements.

11. Structure en treillis comportant des éléments de jonction et des barres selon l'une des revendications précédentes, caractérisée en ce qu' au moins une pièce creuse comporte des ouvertures moulées.

12. Utilisation d'une structure en treillis selon l'une des revendications 2 à 11 pour des engins terrestres, aériens ou aquatiques, des cadres de bicyclette et de motocyclette, des châssis automobiles, des constructions en surface, des constructions en sous-sol, des échafaudages, des systèmes de rayonnage, des meubles.
